**Europäisches Patentamt**

**European Patent Office**

**Office européen des brevets**

(19)

(11) Publication number : **0 306 351 B1**

(12) # EUROPEAN PATENT SPECIFICATION

(45) Date of publication of patent specification :
29.04.92 Bulletin 92/18

(51) Int. Cl.⁵ : **B60K 41/22**

(21) Application number : **88308214.1**

(22) Date of filing : **05.09.88**

(54) **Drive train for a wheeled vehicle and method of controlling same.**

(30) Priority : **04.09.87 JP 222575/87**
**08.09.87 JP 224966/87**
**18.11.87 JP 175965/87**
**19.11.87 JP 292647/87**

(43) Date of publication of application :
**08.03.89 Bulletin 89/10**

(45) Publication of the grant of the patent :
**29.04.92 Bulletin 92/18**

(84) Designated Contracting States :
**DE GB NL**

(56) References cited :
**US-A- 4 071 126**
**US-A- 4 526 255**
**US-A- 4 648 496**
**PATENT ABSTRACTS OF JAPAN, unexamined applications, M field, vol. 11, no. 140, May 8, 1987 THE PATENT OFFICE JAPANESE GOVERNMENT, page 141 M 586**
**Techniques de l'ingénieur B642a, J. M. LEROUX, Embrayages et coupleurs, B645 12-14**

(73) Proprietor : **HONDA GIKEN KOGYO KABUSHIKI KAISHA**
**1-1, 2-chome Minami-Aoyama**
**Minato-ku Tokyo (JP)**

(72) Inventor : **Ohzono, Kouhei**
**2-6-33, Yamamuro**
**Fujimi-shi Saitama-ken (JP)**
Inventor : **Takeuchi, Kazuhiro**
**205, Harigaya**
**Fujimi-shi Saitama-ken (JP)**
Inventor : **Honda, Shoichi**
**1-21-1, Asahi-cho**
**Nerima-ku Tokyo (JP)**
Inventor : **Koyabu, Takeshi**
**4-27-1, Sengen-cho**
**Fuchu-shi Tokyo (JP)**
Inventor : **Yoshida, Yoshihiro**
**4-24-13, Akatsuka**
**Itabashi-ku Tokyo (JP)**
Inventor : **Tanaka, Hiroshi**
**3-748-31, Kitanaka**
**Tokorozawa-shi Saitama-ken (JP)**
Inventor : **Hayashi, Kiyotaka**
**1545-3-404, Ohmagi**
**Urawa-shi Saitama-ken (JP)**

(74) Representative : **Leale, Robin George et al**
**FRANK B. DEHN & CO. Imperial House 15-19 Kingsway**
**London WC2B 6UZ (GB)**

EP 0 306 351 B1

## Description

The present invention is related to a drive train of a wheeled vehicle having an engine and at least one driving wheel. The present invention is also related to a method of controlling the drive train of a wheeled vehicle.

A prior technology as regards a drive train of a wheeled vehicle is disclosed in a Japanese Patent Application published with a first publication no. 61-278630 which forms the preamble of claim 1. The prior technology is briefly described as follows.

The drive train according to the prior technology comprises a first clutch, a transmission and a second clutch which are disposed in this order between an engine and a driving wheel. The first clutch receives driving force from the engine and transmits the driving force to the transmission. Transfer ratio of the first clutch is controlled by a driver through an operation of a clutch lever. Hereinafter, the transfer ratio designates a ratio of output torque outputted by a clutch to an input torque inputted thereto. The transmission receives driving force from the first clutch and transmits the driving force to the second clutch. The transmission ratio is controlled automatically by a control unit taking into account a throttle aperture operated by the driver and other factors such as speed of the vehicle, etc. The transmission ratio hereinafter designates a ratio of rotational frequency of input driving motion inputted to the transmission to rotational frequency of output driving motion outputted thereby. The second clutch receives driving force from the transmission and transmits the driving force to the driving wheel. The transfer ratio is determined automatically. The second clutch is further equipped with a governor and a control unit. The governor sends a signal to the control unit, the signal being responsive to the rotational frequency of the input driving motion inputted to the transmission. The control unit automatically controls a transfer ratio of the second clutch on the basis of the output signal of the governor.

Control of the transfer ratio according to the above-mentioned construction is described more in detail as follows.

At first, while the engine speed and the speed of the vehicle are lower than respective prescribed values, that is, while the vehicle is standing still for example, transfer ratio of the second clutch is null, that is, driving force of the engine is disconnected from the driving wheel at the second clutch. At a same time, transmission ratio of the transmission is kept at a high ratio. When the driver wishes to start running the vehicle, he gradually opens the throttle. Consequently, rotational frequency of the engine increases and so do the transfer ratio of the second clutch and speed of the vehicle. At a same time, transmission ratio decreases gradually so that the vehicle is accelerated effectively. That means, rotational frequency of the engine and the driving motion being inputted to the transmission increases more moderately than rotational frequency of the motion being inputted in the second clutch.

The construction results in a fact that the transfer ratio at the second clutch, which is controlled based on the rotational frequency of the input driving motion transmitting driving force to the transmission, increases more dully compared to an operation of the throttle.

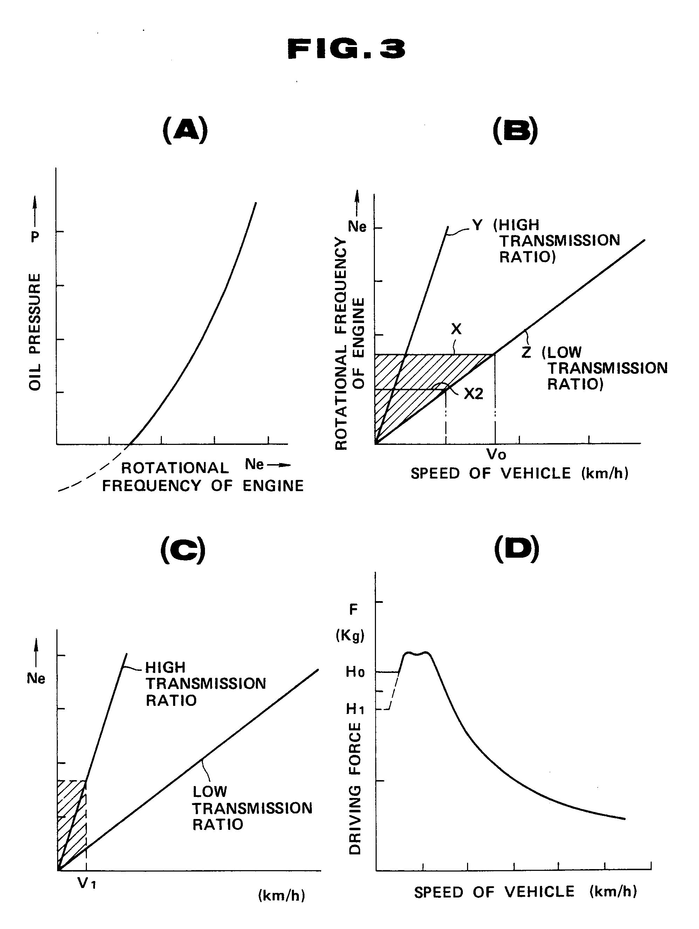

Figure 3(B) shows relations of the engine speed and the vehicle speed for different transmission ratios while the clutches are not slipping. The two solid lines Y and Z, both passing the origin, correspond to a high transmission ratio and a low transmission ratio respectively. The value X shows a minimum engine speed necessary for normally controlling the vehicle at a low transmission ratio. Vehicle velocity corresponding to the value X in the line Z shows the stall speed Vo for the low transmission ratio. When the transmission ratio is low and the vehicle speed is lower than the stall speed Vo, the engine does not generate enough power necessary for controlling the vehicle. Therefore, transmission ratio has to be increased or clutch has to be disconnected so as to raise the engine speed. By the way, the hatched area in the figure designates combinations of engine speed and vehicle speed whereat transfer ratio of the second clutch is set to be lower than 1.0 according to the prior technology. While the condition falls in the area the second clutch is slipping. Slip occurs when the engine speed is lower than the threshold value X irrespective of the speed of the vehicle. But in the reality, the minimum engine speed depends on the transmission ratio, and the minimum engine speed is lower than the value X when the transmission ratio is higher than the above value. Because the hatched area is applied also to higher transmission ratios, slip in the second clutch spoils a rapid acceleration of the vehicle and wastes fuel while the transmission ratio is higher.

A solution to avoid such inconveniences may be to lower the threshold to X2. But if the threshold is lowered, the engine does not generate enough power at lower transmission ratios and the acceleration is spoiled in such cases.

Further, when the vehicle is stopped rapidly, the second clutch is cut off triggered by a sharp drop of the engine speed before the transmission ratio is increased enough. Therefore, the vehicle is obliged to restart with a small transmission ratio resulting in a dull acceleration. It is because the transmission ratio is changeable only when the transmission is rotating in case an automatic transmission having an endless belt for transmitting torque is utilized.

An object of the present invention is to provide a drive train and a method for controlling same by which a slip at the clutch is reduced. Another object of the present invention is to provide a drive train and a method for controlling same which enables to obtain improved acceleration. Further object is to provide a drive train and a method for controlling same which reduces fuel consumption of the vehicle.

According to a first aspect of the present invention there is provided a drive train of a wheeled vehicle having an engine and at least one driving wheel;

(a) a first clutch means connected to the engine for receiving driving force therefrom and outputting the driving force in accordance with a first transfer ratio therebetween varied according to an operation of a driver;

(b) a stepless automatic transmission connected to the first clutch means for receiving the driving force therefrom and outputting the driving force by varying a rotational speed thereof; and

(c) a second clutch means connected to the transmission for receiving the driving force therefrom and transmitting the driving force to the driving wheel in accordance with a varying second transfer ratio therebetween, characterized in that said second transfer ratio is varied according to a rotational frequency of the driving force outputted by the transmission.

According to a second object of the invention there is provided a method for controlling a drive train of a vehicle having an engine and at least one driving wheel, the drive train comprising a first clutch means connected to the engine for receiving driving force therefrom and outputting the driving force; a stepless transmission connected to the first clutch means for receiving the driving force therefrom and outputting the driving force; and a second clutch means connected to the transmission for receiving the driving force therefrom and transmitting the driving force to the driving wheel, comprising the steps of;

(a) setting a transfer ratio at the first clutch means according to an operation of a driver; and

(b) automatically setting a transmission ratio at the transmission; characterized by

(c) automatically setting a second transfer ratio at the second clutch means according to a rotational frequency of the driving force outputted by the transmission.

Some embodiments of the invention will now be described by way of example and with reference to the accompanying drawings, in which:-

Figure 1 shows an oil distributor according to an embodiment of the present invention.

Figure 2 shows a first clutch means, an automatic transmission and a second clutch means according to an embodiment of the present invention.

Figure 3 (A) shows a relation of the pressure of oil supplied to a second clutch means and the rotational frequency of a driving shaft.

Figure 3 (B) shows a relation of the rotational frequency of the engine and the speed of the vehicle according to a prior technology.

Figure 3 (C) shows a relation of the rotational frequency of the engine and the speed of the vehicle according to the present invention.

Figure 3 (D) shows a relation between the driving force and the speed of the vehicle.

Figure 4 shows a second preferred embodiment of the drive train according to the present invention.

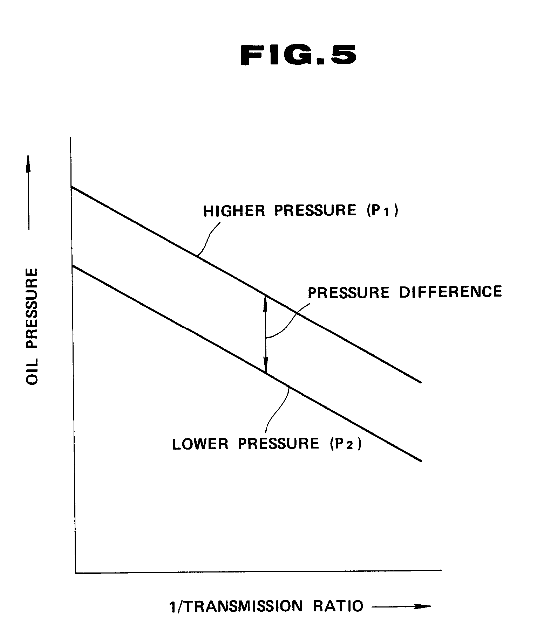

Figure 5 shows a relation of the oil pressure and the transmission ratio.

Figures 6 and 7 show schematically the oil distributor according to the present invention.

Figure 8 s a flow chart showing a logical flow to be followed in a control unit.

Figure 9 shows a drive chain for transmitting driving force at an automatic stepless transmission according to a preferred embodiment of the invention.

Figure 10 is a sectional view of a drive chain according to a preferred embodiment of the invention.

Figure 11 is a partial sectional view of the drive chain shown in Figures 9 and 10.

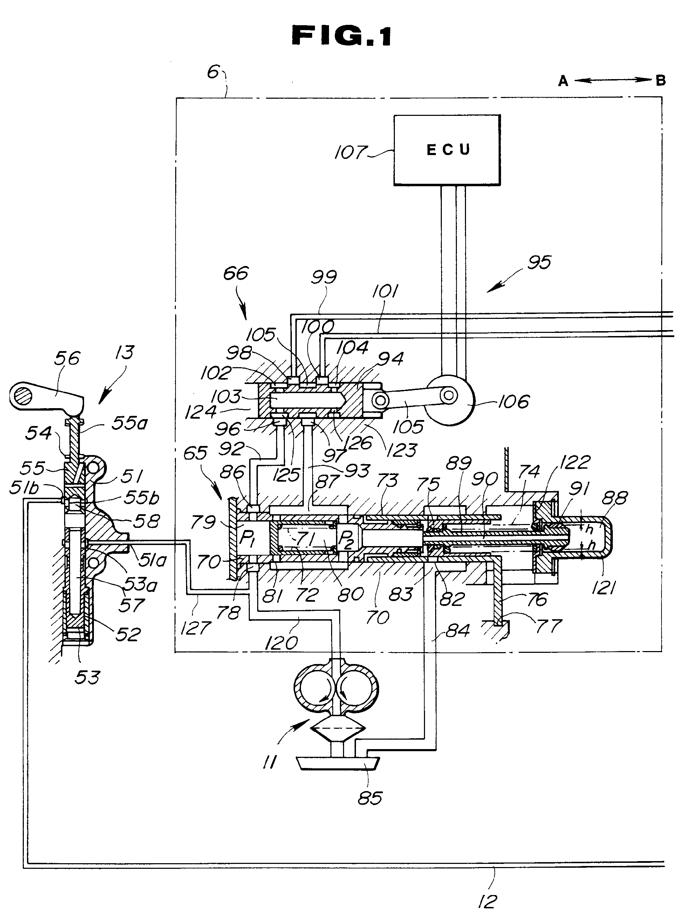

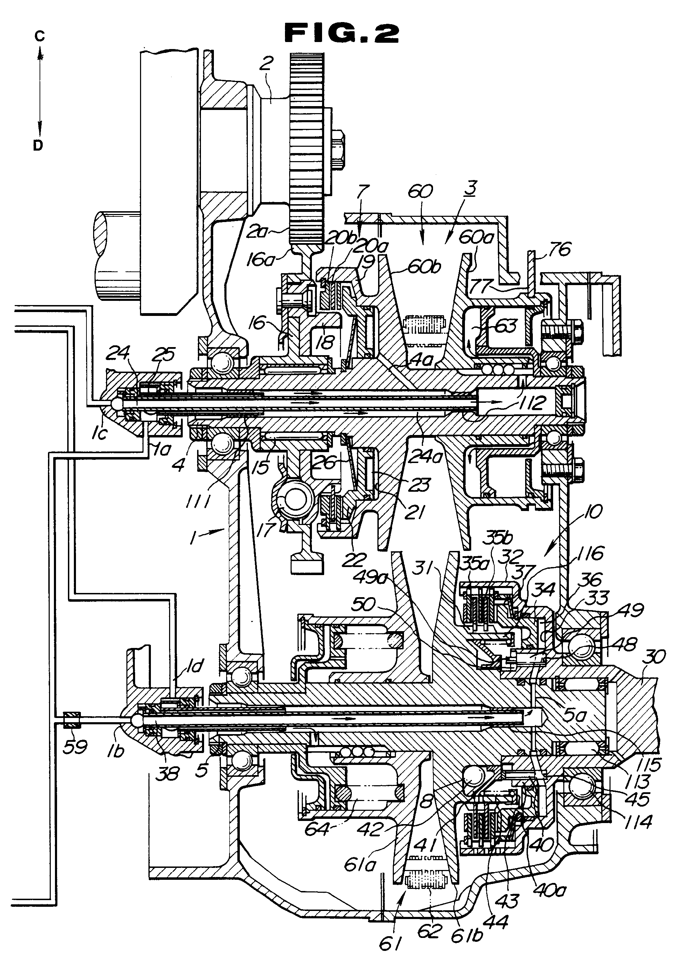

Figures 1 and 2 show a drive train according to an embodiment of the present invention, the drive train comprising a first clutch means 7, a stepless automatic transmission 3, a second clutch means 10 and an oil distributor 6.

As shown in Figure 2, a crankcase 1 is provided to enclose the first clutch means 7, the stepless automatic transmission 3 and the second clutch means 10. A drive shaft 2, disposed through the crankcase 1 supported rotatable thereby, is connected to an engine (not shown) to receive driving force therefrom. At an end of the drive shaft 2 inside the crankcase 1, a gear wheel 2a is connected for a rotational movement with the drive shaft 2.

(Stepless Automatic Transmission)

The stepless automatic transmission 3 comprises a driving pulley 60 for receiving driving force from the engine, a driven pulley 61 for transmitting driving force to a driving wheel (not shown) and an endless torque transmitting means 62 for transmitting torque from the driving pulley 60 to the driven pulley 61. The driving pulley 60, which is in a revolutionary form, comprises a driving shaft 4 supported from the crankcase 1 so as to be rotatable about an axis thereof, a fixed driving flange 60b fixedly connected to the driving shaft 4, a slidable driving flange 60a slidable along the axis of the driving shaft 4 and rotatable coherently therewith about the axis thereof. The fixed driving flange 60b and the slidable driving flange 60a are in a revolutionary form and their surfaces facing to each other are tapered so that the distance therebetween measured along the axis of the driving shaft 4 increases as the distance from the axis increases.

The driven pulley 61, which is in a revolutionary form, is disposed so that an axis of revolution thereof is parallel to that of the driving pulley 60 and comprises a driven shaft 5 supported from the crankcase 1 so as to be rotatable about its axis of revolution, a fixed driven flange 61b fixedly connected to the driven shaft 5, a slidable driven flange 61a slidable along the axis of the driven shaft 5 and rotatable coherently therewith about an axis thereof. Forms of the fixed driven flange 61b and the slidable driven flange 61a are similar to those of the fixed driving flange 60b and the slidable driving flange 60a. The endless torque transmitting means 62, a belt forming a closed loop for example, is wound around the driving pulley 60 and the driven pulley 61, sandwiched between the respective fixed flanges 60b, 61b and slidable flanges 60a, 60b, so as to the rotational movement of the driving pulley 60 is transmitted to the driven pulley 61 therethrough. Both side surfaces of the belt 62 defining a width thereof are disposed in contact with respective surfaces of the fixed flanges 60b, 61b and slidable flanges 60a, 60b.

As the slidable driving flange 60a goes apart from the fixed driving flange 60b, the distance therebetween enlarges and the belt 62 comes closer to the axis of revolution. Thus the effective diameter of the driving pulley 60 decreases. On the contrary, as the slidable driving flange 60a approaches the fixed driving flange 60b, the effective diameter of the driving flange 60 increases. Alteration of an effective diameter of the driven pulley 61 by moving the slidable driven flange 61a should be understood by analogy. Any transmission ratio between a maximum value and a minimum value is obtained by choosing appropriately the effective diameters.

The torque transmitting means 62 may be of any type as far as it effectively transmits the driving force from the driving pulley 60 to the driven pulley 61 while the effective diameters thereof are changing. Following is an example of a torque transmitting means 62 which can suitably be used in the above-mentioned automatic transmission.

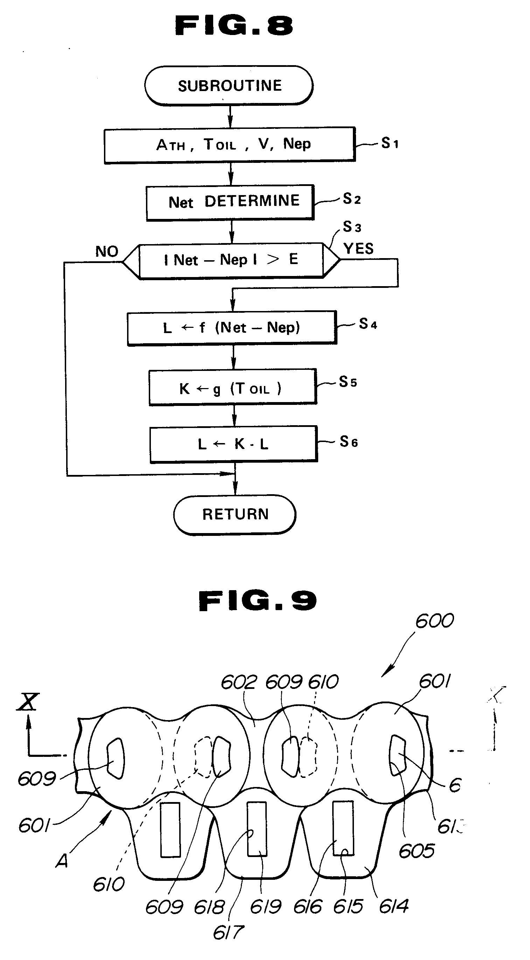

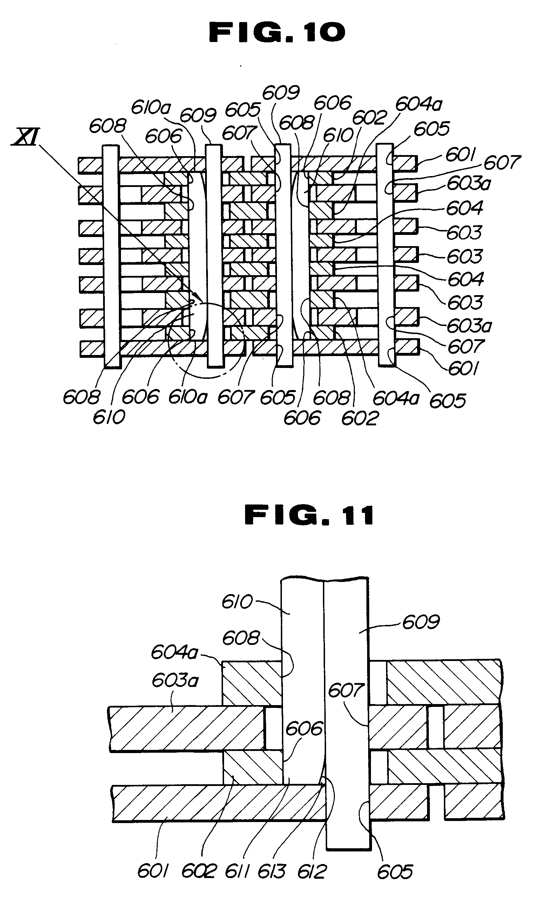

Figure 9 shows a hybrid belt 600 as an example of torque transmitting means suitably used in the automatic transmission. The belt 600 comprises a plurality of link plates 601 having a through hole 618 at its both ends, joint pins 609 threading the through holes 618 of the link plates 601 to tie them one to the others, and locker pins 610 also threading the through holes so as to enforce the joint pins 609, and elastic members 619. As shown in Figure 10, the link plates 601 are composed of first link plates 601, 603a, 603 and second link plates 602, 604a, 604. The first link plates 601, which are disposed to outside, have a pair of through holes 605 in the vicinity of their respective both ends through which the joint pins 609 are to be inserted. The first link plates 603a, 603 which are disposed between the first link plates 601 have a pair of through holes 607 in the vicinity of their respective ends through which the joint pins 609 and the locker pins 610 are to be inserted. The second link plates 602, 604a, 604 have a pair of through holes at a vicinity of their respective ends through which the joint pins 609 and the locker pins 610 are to be inserted. The first link plates 601, 603a, 603 and the second link plates 602, 604a, 604 are laminated from outside to inside in this order so that the first and the second link plates are disposed in turn one by one. The joint pin 609 is disposed to thread all the laminated link plates so that both ends of the joint pin 609 extrude out of the outermost first link plates 601. The locker pin 610 are disposed to thread all the laminated link plates except for the outermost first link plates 601. Both ends of the locker pins 610 are stopped by the inner surface of the outermost first link plates 601. Traction force acting on the belt 600 while the driving force is being transmitted thereby is transmitted from link plates 601 to link plates 601 by virtue of the joint pins 609 and the locker pins 610.

Figure 11 is a close-up of a portion including an end of the locker pin 610. As shown in the figure, end portion 611 of the locker pin 610 is tapered and a slit is formed between the joint pin 609 and the tapered surface 612 of the end portion 611.

As shown in Figure 9, an outermost first link plates 601 and an outermost second link plates 602 have projections 614, 617 projecting downwards therefrom. Through holes 615, 618 are formed at a central part of the projections 614, 617. Elastic members 616, 619 which are generally in a rectangular columnar form are retained by the link plates 601, 602 as passing its both ends through the through holes 615, 618. The elastic members 616, 619 are retained perpendicular to the link plates 601 extruding its both extremities out of them. The ends of the elastic members come in contact with the driving pulleys and the driven pulleys so as to receive and transmit the driving force when the hybrid belt is wound around the pulleys.

As the elastic members 616, 619 are supported at positions close to its both ends, bending moment exerted by the pulleys while contacting therewith is minimized. By virtue of the above-mentioned effects, effective stiffness of the elastic member is increased. Further, by virtue of the taper formed at the end portion of the locker pins 610, pitching and abrasion caused on the locker pins 610 are also minimized.

(First Clutch Means)

A first clutch means 7 is disposed coaxially around the driving shaft 4 on a opposite to the slidable driving flange 60a with respect to the fixed driving flange 60b. The first clutch means 7 comprises a gear wheel 16a in meshing contact with the gear wheel 2a for receiving driving force from the engine, a rotating member 16 connected coaxially to the gear wheel 16a from inside, roller bearings 15 disposed between an outer surface of the drive shaft 4 and an inner cylindrical surface of the rotating member 16 to enable a rotational motion of the member 16 and the wheel 16a about the drive shaft, a first clutch inner element 18 attached to the rotating member 16, a first clutch plate 20a connected to the first inner element, and a damper 17 attached to the first clutch inner element 18. These members rotate coherently as rotational movement is transmitted from the gear wheel 2a. The first clutch means 7 further comprises a first clutch outer element 19 formed integral on the fixed driving flange 60b, a second clutch plate 20b connected to the first clutch outer element 19, a first clutch cylinder 21 formed integral in the fixed driving flange 60b, a first clutch piston 22 disposed slidably in the first clutch cylinder 21 forming an oil chamber 23 therebetween, and a disk spring 26 exerting a thrusting force to the first clutch piston 22 toward the fixed driving flange 60b, which all rotate coherently with the driving shaft 4. While pressurized oil is supplied to the chamber 23, the second clutch plate 20b comes in contact with the first clutch plate 20a by means of a resilient force of the disk spring 26 so that they rotate coherently together by virtue of friction force acting between the first clutch plate 20a and the second clutch plate 20b and transmit the driving force from the engine to the driving pulley 3. When the pressurized oil is supplied to the chamber 23 and the amount of oll retained in the chamber 23 increases, the clutch plates 20a, 20b get apart from each other and the driving force transmission is disconnected.

Pressurized oil is supplied to the oil chamber 23 from the oil distributor 6 through a regulator 13, feed pipe 12, an oil port 1a formed through the crankcase 1, an annulus formed between inner and outer feed pipes 24, 25 both supported from the crankcase 1 and inserted coaxially into the driving shaft 4 through respective leak-tight sealings 111, 112, an annulus formed between the inner feed pipe 24 and an inner cylindrical surface of the driving shaft 4, and an oil feed perforation 4a formed through the driving shaft 4. The oil is discharged through the above-mentioned lines in a reverse direction.

(Second Clutch Means)

The second clutch means 10 has a construction similar to the first clutch means 7. The second clutch means 10 is disposed coaxially around the driven shaft 5 by the fixed driven flange 61b the other side of the slidable driven flange 61a. The second clutch means 10 comprises a second cluch inner element 31 formed integrally on the fixed driven flange 61b, a first clutch plate 35a connected to the second clutch inner element 31, which rotate coherently with the driven shaft 5 of the driven pulley. The second clutch means 10 further comprises a second clutch outer element 32 formed integrally with the output shaft 30 connected to the driving wheel (not shown), a second clutch plate 35b connected to the outer element 32, a second clutch cylinder 33 formed integrally in the second clutch outer element 32 and a first clutch piston 34 disposed slidably in the second clutch cylinder 33 forming an oil chamber 36 therebetween, which all rotate coherently wits the driven shaft 5. The output shaft 30 is disposed coaxially to the driven shaft 5 and supported through roller bearings 113 and ball bearings 114 so as to be rotatable about its axis of revolution. While pressurized oil is not supplied to the chamber 23, the piston 34 is at its right-most position by means of a resilient force of a disk spring 37 and the second clutch plate 35b is out of contact with the first clutch plate 35a so as to disconnect the driving force from the engine to the output shaft 30. When pressurized oil is supplied to the chamber 36, the piston slides leftwards, and the first clutch plate 35a comes in contact with the second clutch plate 35b against the resllient force of a disk spring 37 so that they rotate coherently together by virtue of friction force acting therebetween and the driving force from the engine is transmitted to output shaft 30.

Oil is supplied to the oil chamber 36 through the oil feed line 12, an oil port 1b formed through the crankcase 1b, an oil feed pipe supported from the crankcase 1 and inserted into the driven shaft 5 through a leak-tight sealing, and an oil feed perforation 5a formed through the driven shaft 5.

Supply of the oil to the chamber 36 is controlled by a servo-valve 40 operated by a governor 8 as follows.

The governor 8 comprises a cylindrical governor housing 116 formed integrally and coaxially in the fixed driven flange 61b, a slidable member 41 disposed in the governor housing 116 so as to form a ball chamber therebetween and slidable along the axis of the driven shaft 5, a governor ball 42 retained in the ball chamber, a spring stopper 43 fixed at a free end of a cylindrical wall defining the governor housing 116, and a spring 44 disposed between the slidable member 41 and the spring stopper 43 so as to thrust the slidable member leftwards toward the governor ball 42. The slidable member 41 has a conical surface facing the governor ball 42 which is tapered from left side to right side, as shown in Figure 2. While rotational frequency of the driven pulley 61 is smaller than a certain level, the spring 44 thrusts the slidable member 41 to its left-most position whereat the governor ball 42 is in contact with two surfaces of the driven shaft 5 defining the ball chamber and the slidable member 41. As the rotational frequency of the driven shaft 5 increases, the centrifugal force acting on the governor ball 42 increases. In case the rotational frequency becomes higher than a prescribed level, the governor ball 42 pushes the conical surface of the slidable member 41 to make it slide right against the resilient force of the spring 44. The force thrusting the slidable member 41 is proportional to the rotational frequency of the driven pulley 61.

A valve hole 45, formed through the second clutch cylinder 33, communicates with the oil feed perforation 5a at one end and opens toward the slidable member 41 at the other end. The servo-valve 40, slidably retained in the valve hole 45, has a hollow cylindrical form. The hollow of the servo-valve is opening toward the perforation 5a and communicating with cylindrical space defined by the governor housing 116 through a small aperture 40a formed therethrough.

At generally a symmetric position as regards the servo-valve with respect to the axis of the driven shaft 5, a piston hole 48 is formed through the clutch cylinder 33 48 is communicating with the valve hole 45 through a communication path (not shown) and with the oil feed perforation 5a. A piston 49 is disposed slidably in the piston hole 48. Opening of the piston hole 48 opening toward the slidable member 41 is closed by a stopper 50 which limits a movement of the piston 49 beyond the stopper. A through-hole is formed at the center of the stopper 50 and a protuberance 49a of the piston 49 is projecting therethrough toward the slidable member 41.

As the rotational frequency of the driven shaft becomes higher than the prescribed level, the governor ball 42 thrusts the slidable member 41 so that the slidable member 41 slides right. Then, the slidable member 41 comes in contact with the butt 49a. The butt 49a resists the thrusting force of the slidable member 41 to a certain extent and begins to slide right together with the slidable member 41 as the rotational frequency of the driven shaft becomes further higher. In such conditions, the slidable member 41 thrusts the piston 49 and the servo-valve 40 right and the aperture 40a is closed by the cylindrical wall defining the valve hole 45. As an opening area of the aperture 40a decreases, the pressure of the oil supplied to the oil chamber 36 increases and the piston 34 slides leftwards so as to press the second clutch plate 35b to the first clutch plate 35a.

(Oil Distributor)

As shown in Figure 2, the oil distributor 6 comprises an oil pump 11, an oil pressure controller 65, a selector 66, a connector 13, a control systems 95 and pipings connecting them together. The oil pump 11 is such a pump as geared pump, vane pump, or rotary pump, and is activated by the engine through a drive mechanism (not shown). The oil pump 11 is so constructed that its rotational frequency increases with the increase of the rotational frequency of the engine, as shown in Figure 3(A).

(Oil Pressure Controller)

The oil pressure controller 65 receives pressurized oil from the oil pump 11 through a feed line 120 and supplies the oil to the selector 66 through feed lines 92, 93. The oil pressure controller 65 returns surplus oil to the oil pan 85 of the oil pump 11 through a discharge line 84. The controller 65 comprises a cylindrical body 70, a piston 72 disposed in the body 70 and slidable along the body 70, a spring member 71 for giving a thrusting force to the piston 72 leftwards, a sleeve 73 slidable within the cylindrical body 70, a piston 75 retained slidable within the sleeve 73, a spring 74 giving a thrusting force to the sleeve 73. A plunger 76 is attached to the sleeve 73 at an end thereof and received by a groove 77 formed in a wall connected to the driving slidable flange 60a at the other end 76. Oil is supplied from the oil pump 11 through the feed line 120 to a chamber 79 defined by the piston and the cylindrical body 70 at a left side of the piston 72. As the pressure of oil supplied to the chamber 79 increases higher than a prescribed level, the piston 72 slides rightward against the force of the spring member 71 and the chamber 79 is communicated with a chamber 80 formed at the right side of the piston 72 through a communication path 81. Therefore, the pressure in the chamber 79 does not exceed a threshold which is determined by the pressure in the chamber 80 and the resilient force of the spring member 71. On the other hand, when the pressure in the chamber 80 exceeds a certain level, the sleeve 73 is thrusted by the pressure to slide rightward against the resilient force of the spring 74 and the chamber 80 is communicated with the discharge line 84 through a discharge outlet 82 formed in the sleeve 73. Therefore, the pressure in the chamber 80 does not exceed a level which is determined by the resilient force of the spring 74 and the position of the discharge outlet 82. Position of the sleeve 73 is determined according to a position of the slidable driving flange 60a because they are mechanically linked through an end 76 and a groove 77 as above mentioned. As the slidable driving flange 60a comes close to the fixed driving flange 60b, the sleeve 73 comes rightward. The chamber 79 and the chamber 80 are connected to the selector 66 through a feed line 92 and 93 respectively. Thus, the pressure of the oil supplied through the feed line 92 is always higher than that supplied through the feed line 93 by a constant value and the two pressures become higher when the slidable driving pulley 60a goes apart from the fixed driving pulley 60b. When the slidable driving pulley 60a comes close to the fixed driving pulley 60b, the pressure of oil supplied from the controller 65 goes down while keeping the pressure difference constant.

At a central portion of the piston 75, a tubular tie rod 89 is connected connecting the chamber 80 to a pressure chamber 88 formed at the other end of the rod 89. The pressure chamber 88 is defined by a chamber wall 121 and a sealing 122 closing the open end of the chamber wall 121. The right end of the tie rod 89 is inserted in the pressure chamber 88 through the sealing 122 and a slidable ball 91, having a diameter slightly smaller than an inner diameter of the pressure chamber 88 is connected to the right end of the tie rod. The chamber 80 and the pressure chamber 88 are communicating with each other through a hollow 90 formed through the rod 89. Thus, a closed space is defined by the chamber wall 121 and the slidable ball 91 and the pressure therein is equal to the chamber 80. Thus constructed slidable ball 89 and the chamber wall 121 permit a clearance therebetween while keeping leaktightness. By virtue of the construction, exactitude required in fabrication of sealings becomes less severe compared to a leaktight sealing composed of a piston, piston ring and a cylinder. Further, friction caused at the sealing can also be decreased by the construction.

(Selector)

The selector 66 comprises a cylindrical body 123 having a cylindrical hollow space 124 therein, a slidable member 94 provided in the space 124 so as to be slidable therealong, a high pressure inlet orifice 96, a low pressure inlet orifice 97, outlet orifices 98, 100 connected respectively with feed lines 99, 101. The slidable member 94 has a hollow 103 at a central portion thereof and four nozzles 102, 104, 125, 126 are formed through the member 94 to communicate the hollow 103 with outside of the slidable member 94. A peripheral groove 105 is formed around the slidable member 94 so as to define an annular space between the member 94 and the cylindrical body 123. When the slidable member is at a position shown in Figure 1, outlet orifices 98 is connected to the high pressure feed line 92 through the nozzle 125 and the hollow 103. The outlet orifice 100 is also connected to the high pressure feed line 92 through the nozzle 125, the hollow 103 and the nozzle 104. Therefore, pressurized oil is supplied to both of feed lines 99, 101. Position of the slidable driving flange 60a and the slidable driven flange 61a does not change in this case. In case the slidable member 94 displaces leftwards, the orifice 98 is connected to the low pressure feed line 97 through the annular space 105 and the orifice 100 is connected to the high pressure feed lines 92 through the nozzle 125, hollow 103 and the nozzle 104. Therefore, low pressure oil is supplied to the oil chamber 63 of the driving pulley 3 through the feed line 99 and high pressure oil is supplied to the oil chamber 64 through the feed line 101. In this case, the slidable driving flange 60a goes apart from the fixed driving flange 60b and the slidable driven flange 61a comes toward the fixed driven flange 61b resulting in an increase of the transmission ratio. When the slidable member 94 slides right, the orifice 98 is connected to the high pressure feed line 92 through the nozzle 96, the hollow 103 and the nozzle 102. The orifice 100 is connected to the low pressure feed line 93 through the nozzle 97 and the annular space 105. Therefore in this case, the pressure of oil supplied to the feed lines 99, 101 are inverse with respect to the former case. Consequently, the slidable driving flange 60a comes closer to the fixed driving flange 60b and the slidable driven flange 61b goes apart from the fixed driven flange 61a resulting in a decrease of the transmission ratio.

(Control Unit)

The control unit 95 comprises a central control unit 107, an actuator 106 controlled by the control unit 107, a tie rod 105 for transmitting a movement of the actuator 106 to the slidable member 94. The control unit 107 receives a signal representative of the throttle aperture. By referring to a map stored in itself, the control unit 107 determines an objective engine speed given the throttle aperture. The relation of the throttle aperture and the objective engine speed has been determined beforehand on the basis of the experiments, for example. The control unit 107 compares the object engine speed with the actual engine speed and send a control signal to the actuator 106 so that the actual engine speed coincides with the objective engine speed. According to the control signal, the actuator 106 moves the slidable member 94 through the tie rod 105 so as to send the pressurized oil selectively to the pulleys 60, 61. By changing the transmission ratio at the transmission 3, the actual engine speed is varied so as to coincide with the objective engine speed.

In a modified preferred embodiments, the control unit 107 may have a following fine control means or procedure in order to enable a further reliable and stable operation of the transmission.

The amount of the oil to be supplied from the oil distributor 95 is determined by the area of aperture at an oil path in the selector 66. By the way, temperature of the oil changes while the vehicle is running and so does the viscosity of the oil. That means that, if the area of the aperture is kept constant, relatively small amount of oil is supplied when the temperature thereof is low and relatively large amount of oil is supplied when the temperature is high. Speed of transmission ratio alteration depends, therefore, on the temperature of the oil. Fine control means regulates the speed of transmission ratio alteration by virtue of the following procedure.

In this preferred embodiment, position of the slidable member 94 is generally controlled by virtue of a main routine implanted in the control unit 107, the main routine not taking into account the effects of the oil temperature. Fine control procedure is performed by a subroutine called for by the main routine. The main routine and the subroutine are implanted in a control unit comprising a central processing unit, a read only memory and a random access memory, for example.

Figure 8 shows a procedure performed in the subroutine. At the first step S1 of the subroutine, such variables as throttle aperture Ath, temperature of the oil Toil, velocity of the vehicle V, and rotational frequency of the engine Nep are read by sensors and inputted to the control unit.

The control unit calculates an objective rotational frequency Net of the engine for a given throttle aperture Ath according to a predetermined relation therebetween, at step S2.

Difference of the objective engine speed Net and the engine speed Nep is calculated and its absolute value is compared with a prescribed threshold value E, at step S3. If the absolute value of the difference is equal to or smaller than the threshold value E, the control unit return to the main routine without performing any further operation in the subroutine. If the absolute value of the difference is larger than the threshold value E, the control unit proceeds to the next step, that is step S4.

At step S4, the control unit calculates the displacement L by which the slidable element 94 is to be displaced according to a prescribed function.

Then, the control unit calculates a correction factor K which is a function of the temperature of the oil Toil.

A new displacement L is calculated given the correction factor K and the displacement L of the former step, at step S6.

Then, the control returns to the main routine together with the displacement L by which the slidable element 94 is to be displaced.

As mentioned above, the control unit controls the area of the aperture through which oil is supplied to the downstream mechanisms by fine adjusting the displacement of the slidable member according to the temperature of the oil.

(Connector)

The connector 13 comprises a body 51 having a cylindrical hole therein, a first slidable member 53 disposed in the hole slidable therein, a first spring 52 exerting a resilient force to the first slidable member 53 upwards, a second slidable member 55 disposed slidable in the hole, a second spring 54 exerting a resilient force to the second slidable member 55 downwards, and an arm 56 in touch with a plunger portion of the second slidable member 55 extruding out of the hole. The first slidable member 53 has a pit 57 opening upwards and orifices 53a formed through the member 53 to communicate the pit 57 with outside. The second slidable member 55 has a pit 58 opening downwards and orifices 55b formed through the member 55 to communicate the pit 58 with outside. A branch line 127 leads pressurized oil from the oil feed line 120 to the hole through the body 51.

When the arm 56, which is connected to the clutch lever (not shown), is not operated, the connector 13 is at a position shown in Figure 1. In the case, The branch line 127 communicates with the feed line 12 through the connector 13. More precisely, oil fed through the branch line 127 goes through an inlet port 51a formed in the body 51, an orifice 53a formed in the first slidable member 53, the pits 57, 58, the orifice 55b, and an outlet port 51b. Further, the oil is supplied to the first and the second clutches 7, 10 through the feed line 12. When the clutch lever is operated and the arm 56 pushes down the second slidable element 55, the first slidable member 53 goes down and the orifice 53a formed therein is dislocated from the feed line. Thus, the oil supply is seized. When the arm 56 goes up again, the first and the second slidable member 53, 55 goes up by virtue of the resilient force of the springs 52, 54 so as to re-communicate the oil flow. In case the pressure of the oil supplied to the connector becomes higher than a certain prescribed level, the oil in the pit 57 pushes down the first slidable member 53 so that the orifice 53a is uncoupled from the feed line. Therefore, the connector also prevents that excessively pressurized oil from being supplied to the clutches 7, 10.

(Transmission Pre-setter)

In a modified preferred embodiment, the oil distributor 6 may further have a transmission pre-setter for manually pre-setting the transmission ratio overriding the automatic transmission control.

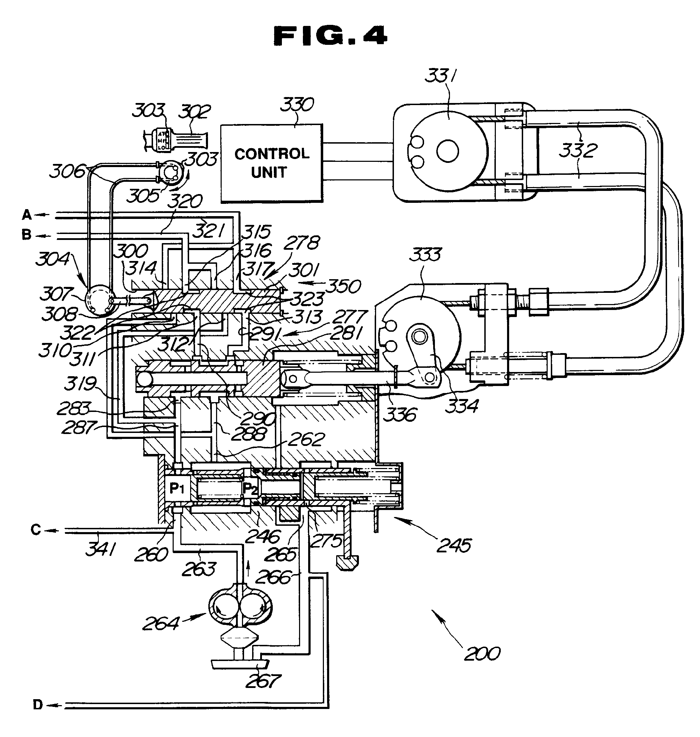

Figure 4 shows an example of an oil distributor 200 wherein the transmission pre-setter 278 according to the modified preferred embodiment is implanted. Connector as above mentioned is also included in the distributor but is not shown in the figure for a simplicity of the figure. Other components are same functions as above-mentioned except that a transmission pre-setter 278 is connected therewith. The way how they are connected to each other is explained as follows.

An oil pump 264 receives oil from an oil pan 267 and sends out pressurized oil through an oil feed line 263. The oil feed line 263 is branched into a main feed line 260 and a branch line 341. The branch line 341 supplies the pressurized oil to the a connector (not shown). The main feed line 260 supplies the pressurized oil to an oil pressure controller 245 having a construction mentioned above. The pressure controller 245 controls the pressure of the oil to a high pressure oil and a low pressure oil so that the pressure difference between the two is constant. The controller 245 returns surplus oil to the oil pan 267. The controller 245 sends out the high pressure oil and the low pressure oil through feed lines 287 and 262 respectively. The feed line 287 is branched into two feed lines 319 and 283. The feed line 262 is also branched into two feed lines 318 and 288. The feed lines 283 and 288 are connected to a selector 277 so as to supply the selector with the high pressure oil and the low pressure oil respectively. The feed lines 318 and 319 are connected to the transmission pre-setter 278 so as to supply the pre-setter 278 with the high pressure oil and the low pressure oil respectively. The selector 277 is constructed to send the high pressure oil and the low pressure oil through oil feed lines 290 and 291 while selecting the feed lines 290 and 291. Selection of the feed lines 290, 291 is controlled by a control unit 330 which activates a slidable member 281 of the selector 277 through a motor means 331, wire means 332, rotary means 333, an operation arm 334, and a tie rod 336. The feed lines 290, 291 are connected to the transmission pre-setter 278.

Operation of the oil distributor, as far as the above-mentioned oil pump 264, oil pressure controller 245, selector 277 and control unit 330 are concerned is same to that of the above-mentioned first embodiment.

The transmission pre-setter 278 comprises a body 350 having a cylindrical hollow space 300 therein, a slidable member 301 disposed in the hollow space 300 so as to be slidable along it, and a position controller 304 connected to the slidable member 301. The position controller 304 comprises a selector knob 303 disposed at a handle lever 302 for being operated by a driver, a selector drum 305 rotatable according to an operation of the selector knob 303, operation wire 306 for transmitting a rotation of the selector drum to an operation drum 307, and a tie rod 308 disposed between the operation drum 307 and the slidable member 301 for transferring the rotation of the operation drum 307 to a reciprocal movement and transmitting the reciprocal movement to the slidable member 301. Inlet nozzles 310, 311, 313, 313 are formed in the body 305 connecting the feed lines 318, 290, 319, 291 to the hollow space 300 respectively. On generally the opposing side of the wall defining the hollow space 300, there are provided outlet ports 314, 315, 316 and 317. The outlet ports 315 and 316 are connected to an inlet nozzle 1b formed in the crankcase 1 through a feed line 320. The outlet ports 314 and 317 are connected to the inlet nozzle 1c of the crankcase 1 through a feed line 321. Annular grooves 322 and 323 are formed in the periphery of the slidable member 301.

When the slidable member 301 is at a position shown in Figure 4, oil fed from the selector 277 through the inlet port 311 and 313 are supplied to the outlet ports 315 and 317 through the annular grooves 322 and 323 respectively. Further, as the slidable element 281 of the selector 277 is at its intermediate position, the oil supplied through the feed lines 290 and 291 are both connected to the feed line 262 and are pressurized at a low pressure. Therefore, low pressure oil supplied by the oil pressure controller 245 is supplied to both the driving wheel 60 and the driven wheel 61. Consequently, position of the pulleys 60 and 61 are kept unchanged. In other words, while the slidable member 301 is at a position shown in Figure. 4, the pre-setter 278 acts as if the feed lines 290 and 291 are connected directly to the feed lines 320 and 321 respectively.

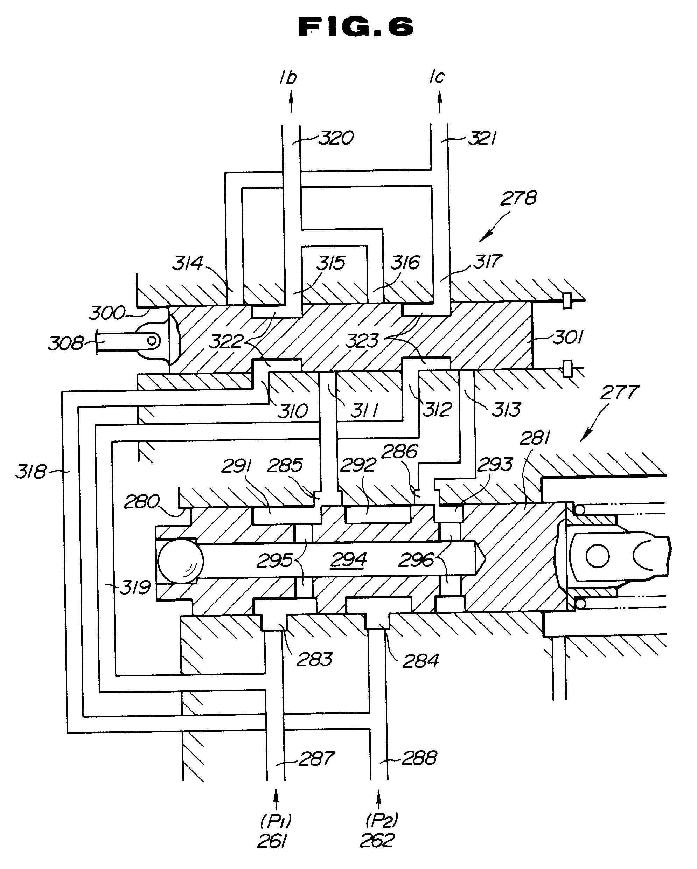

When the slidable member 301 is at its right-most position as shown in Figure 6, the inlet ports 311 and 313 are disconnected from further feed lines. On the contrary, the feed lines 318 and 319, which are connected respectively to the high pressure feed line 261 and the low pressure feed line 262 of the pressure controller 245, are connected to the annular grooves 322 and 323, respectively. Through the annular grooves 322 and 323, the high pressure oil is supplied through the feed line 321 and low pressure oil is supplied through the feed line 321. Therefore, transmission ratio is increased by a manual operation of the selector knob 303 irrespective of the automatic transmission control of the control unit 330.

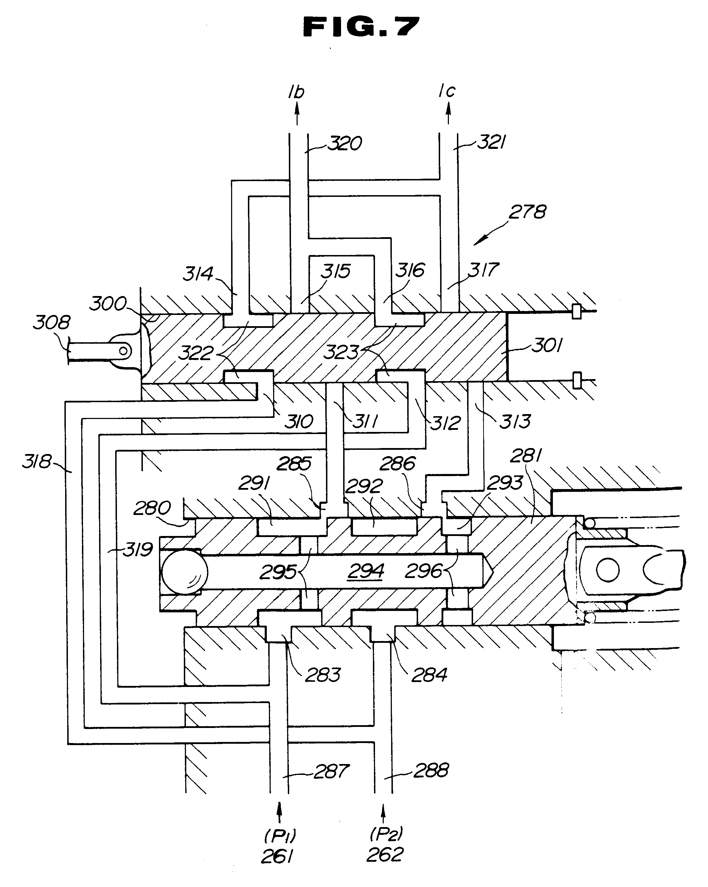

When the slidable member 301 is at its left-most position as shown in Figure 7, the inlet ports 311 and 313 are disconnected from further feed lines, either. On the contrary, the feed lines 318 and 319, which are connected respectively to the high pressure feed line 261 and the low pressure feed line 262 of the pressure controller 245, are connected to the annular grooves 322 and 323, respectively. Through the annular grooves 322 and 323, the feed lines 318 and 319 are connected to the feed lines 320 and 321 respectively. Thus, transmission ratio is decreased by a manual operation of the selector knob 303 irrespective of the automatic transmission control of the control unit 330.

(Operation of the System)

When the engine is started, the oil pump 11 starts operating and supplies pressurized oil to the controller 65 and the connector 13. While the clutch lever is not operated, the pressured oil supplied to the connector is supplied to the clutches 7,10 therethrough.

The slidable member 22 pushes the clutch plate 20b on the clutch plate 20a so that they rotate coherently.

In the second clutch 10, the pressurized oil is prevented from being supplied to the chamber 36 while a rotational frequency does not exceed a threshold level because the pressurized oil escapes through the servo-valve 40. Therefore, the second clutch 10 is disconnected. As the rotational frequency of the driven shaft 5 exceeds the threshold value, the governor ball 8 thrusts the servo-valve 40 to close the perforation 40a through which the oil has been escaping. Thus the oil begins to be supplied to the oil chamber 36 so as to thrust the piston 34 leftwards and push the clutch disk 35b on the clutch disk 35a. As the pressure of oil supplied to the oil chamber 36 increases gradually with an increase of the rotational frequency of the driven shaft 5, driving force begins to be transmitted gradually in accordance with the throttle aperture. In other words, half clutch is employed automatically while the engine speed is relatively low and gradually driving force is fully transmitted.

As the throttle is kept open and the acceleration continues, the transmission automatically decreases the transmission ratio so as to obtain a maximum acceleration, that is, during an acceleration, rotational frequency of the engine increases more slowly than the increase of rotational frequency of the driven shaft 5. In consequence to the increase of the rotational frequency of the driven shaft 5, not the engine speed, the second clutch 10 begin to transmit the driving force to the driving wheel. Therefore, driving force of the engine is transmitted to the driving wheel as soon as the engine generates sufficient driving force. It means that transmission loss during acceleration is minimized and a maximum acceleration is obtained yet minimizing the fuel consumption.

Further, according to the construction, the driving pulley 60 and the driven pulley 61 of the automatic transmission 3 rotates according to a rotation of the engine even the vehicle is standing still as long as the second clutch 10 is set off. Therefore, transmission ratio is reset to a high ratio in order to prepare for restarting while the vehicle is stopping. Thus, a smooth start or acceleration is obtained even after the vehicle is stopped rapidly.

The first clutch 7 is set off when the engine is started because pressured oil is not yet supplied to the clutch 7. So, the load of starter is minimized as it is enough to rotate the engine itself.

According to the above-mentioned embodiments, the second clutch 10 is connected to the connector 13. But the second clutch 10 may receive pressured oil directly from the oil pump 11.

(Effects of the embodiment)

As has been made clear by the preceding description, the present embodiment has following effects.

A rapid acceleration of vehicle is obtained while minimizing a slip at the clutch because a rotational frequency of a driven shaft of the automatic transmission is take into account in controlling the second clutch.

Transmission ratio can be altered to a high ratio in order to assure a rapid acceleration of the vehicle while the vehicle is standing still. Therefore, a rapid acceleration can be obtained even after a rapid stopping of the vehicle wherein the transmission ratio is kept at a relatively low ratio.

Torque necessary to start the engine is minimized because the first clutch is automatically disconnected before the engine starts.

It becomes possible to alter the transmission ratio irrespective of the automatic transmission control, when a transmission pre-setter is provided with as is described in a modified preferred embodiments. Therefore, a more delicate control of the vehicle, for example, to keep the transmission ratio high while running down a slope becomes possible.

**Claims**

1. A drive train of a wheeled vehicle having an engine and at least one driving wheel;
    (a) a first clutch means (7) connected to the engine for receiving driving force therefrom and outputting the driving force in accordance with a first transfer ratio therebetween varied according to an operation of a driver;
    (b) a stepless automatic transmission (3) connected to the first clutch means (7) for receiving the driving force therefrom and outputting the driving force by varying a rotational speed thereof; and
    (c) a second clutch means (10) connected to the transmission (3) for receiving the driving force therefrom and transmitting the driving force to the driving wheel in accordance with a varying second transfer ratio therebetween, characterized in that said second transfer ratio is varied according to a rotational frequency of the driving force outputted by the transmission (3).

2. A drive train of a wheeled vehicle according to claim 1 which is further characterized by comprising a clutch controller means (65) for controlling the transfer ratio of the second clutch means (10) so that;
    (a) the second ratio is null while a rotational frequency of the driving force outputted by the transmission (3) is lower than a first prescribed value;
    (b) the ratio increases according to an increase of the rotational frequency of the driving force outputted by the transmission (3) in condition that the rotational frequency is equal to or higher than the first prescribed value and lower than a second prescribed value; and
    (c) the ratio is kept 1.0 while the rotational frequency of the driving force outputted by the transmission (3) is equal to or higher than said second prescribed value.

3. A drive train of a wheeled vehicle according to claim 2 characterized in that the second clutch means (10) comprises;
    (a) a first clutch plate (35a) connected to the transmission (3) for rotating therewith;
    (b) a second clutch plate (35b) connected to the driving wheel for rotating therewith;
    (c) a clutch actuator means (34) connected to one of the first clutch plate (35a) and the second clutch plate (35b) so as to move said one of the first clutch plate (35a) and the second clutch plate (35b) toward and away from the other according to a pressure of oil supplied thereto;

(d) an oil distributor means (6) for supplying pressurized oil to the clutch actuator means (34); and

(e) a governor means (8) disposed to rotate coherently with the driving motion outputted from the transmission (3) and control the oil flow according to the rotational frequency of the driving motion.

4. A drive train of a wheeled vehicle according to claim 1, 2 or 3 wherein a transmission preset means (278) is provided for presetting a transmission ratio selectively at a high ratio or a low ratio according to an operation of a driver.

5. A drive train of a wheeled vehicle according to any preceding claim wherein the stepless automatic transmission (3) comprises;

(a) a driving pulley (60) driven by the engine having a driving shaft (4), a fixed driving flange (60b) fixedly connected to the driving shaft (4), a slidable driving flange (60a) slidable along an axis of the driving shaft (4) and rotatable coherently therewith about the axis thereof;

(b) a driven pulley (61) connected to the driving wheel, having a driven shaft (5) rotatable about an axis thereof, a fixed driven flange (61b) fixedly connected to the driven shaft (5), a slidable driven flange (61a) slidable along the axis of the driven shaft (5) and rotatable coherently therewith about an axis thereof;

(c) endless torque transmitting means (62) for transmitting torque from the driving pulley (60) to the pulley (61); and

(d) an oil distributor (6) which selectively sends high pressurized oil and low pressurized oil to the driving pulley (60) and the driven pulley (61) for varying the transmission ratio, a pressure difference between the high pressurized oil and the low pressurized oil being generally constant;

whereby an effective diameter of the driving pulley (60) and the driven pulley (61) is varied so as to vary a transmission ratio by varying the position of the slidable driving flange (60a) and the slidable driven flange (61a).

6. A drive train of a wheeled vehicle according to claim 5 which is characterized in that the endless torque transmitting means (62) comprises;

(a) outside first link plates (601) having a first end, a second end and a projection (614) extending perpendicular to the line connecting the first and second ends, the first end and the second end having a first through hole (605) and the projection (614) having a through hole (615).

(b) inside first link plates (603) disposed between a pair of outside first link plates (601), the inside first link plates (603) having a third end and a fourth end, the third end and the fourth end having a second through hole (607) larger then the first through hole (605);

(c) inside second link plates (602, 604) disposed alternately with the inside first link plates (603) between a pair of outside first link plates (601), the inside second link plates (603, 604) having a fifth end and a sixth end, the fifth end and the sixth end having a second through hole (618);

(d) linkage pins (609) threading the outside first link plates, the inside first link plates and the inside second link plates being inserted into the first and second through holes;

(e) locker pins (610) threading the inside first link plates and the inside second link plates being inserted in the second through holes; and

(f) elastic members (616, 619) disposed perpendicular to the outside first link plates threading the through holes of the projection and extending outwards therethrough.

7. A drive train of a wheeled vehicle as claimed in claim 5 or 6 further comprising means for regulating the amount of oil to be supplied to the transmission taking into account the change in viscosity of the oil caused by a change of the temperature thereof.

8. A drive train of a wheeled vehicle according to claim 7 which is characterized in that the oil distributor (6) comprises oil ports (96, 97, 98, 100) for distributing the high pressurized oil and the low pressurized oil therethrough, the open area of the oil ports being variable according to the temperature of the oil to be supplied therethrough.

9. A method of controlling a drive train of a vehicle having an engine and at least one driving wheel, the drive train comprising a first clutch means (7) connected to the engine for receiving driving force therefrom and outputting the driving force; a stepless transmission (3) connected to the first clutch means (7) for receiving the driving force therefrom and outputting the driving force; and a second clutch means (10) connected to the transmission for receiving the driving force therefrom and transmitting the driving force to the driving wheel, comprising the steps of;

(a) setting a transfer ratio at the first clutch means (7) according to an operation of a driver; and

(b) automatically setting a transmission ratio at the transmission (7); characterized by

(c) automatically setting a second transfer ratio at the second clutch means (10) according to a rotational frequency of the driving force outputted by the transmission (3).

10. A method of controlling a drive train according to claim 9 which method being characterized in that the step of setting the transfer ratio comprises the steps of;

(a) setting the transfer ratio null while a rotational frequency of the driving force outputted by the transmission (3) is lower than a first prescribed value;

(b) setting the transfer ratio according to an increase of the rotational frequency of the driving force outputted by the transmission (3) while the rotational frequency of the engine is equal to or higher than the first prescribed value and the rotational frequency of the drive shaft is lower than a second prescribed value; and

(c) keeping the transfer ratio to 1.0 while the rotational frequency of the driving force outputted by the transmission (3) is equal to or higher than the first prescribed value and the rotational frequency of the driving force outputted by the transmission (3) is equal to or higher than a second prescribed value.

**Patentansprüche**

1. Antriebsstrang eines Radfahrzeuges mit einem Motor und wenigstens einem antreibenden Rad,

(a) einer ersten mit dem Motor verbundenen Kupplungs- einrichtung (7) zur Aufnahme von Antriebskraft von diesem sowie zur Abgabe der Antriebskraft gemäß einem ersten Übertragungsverhältnis zwischen diesen, das sich gemäß einer Betätigung durch einen Fahrer ändert,

(b) einem mit der ersten Kupplungseinrichtung (7) verbundenen stufenlosen automatischen Getriebe (3) zur Aufnahme der Antriebskraft von dieser sowie zur Abgabe der Antriebskraft durch Änderung von deren Drehzahl, und

(c) einer zweiten mit dem Getriebe (3) verbundenen Kupplungseinrichtung (10) zur Aufnahme der Antriebskraft von diesem sowie zur Übertragung der Antriebskraft auf das antreibende Rad gemäß einem sich ändernden zweiten Übertragungsverhältnis zwischem diesen, **dadurch gekennzeichnet**, daß das zweite Übertragungsverhältnis gemäß der Drehfrequenz der vom Getriebe (3) abgegebenen Antriebskraft geändert wird.

2. Antriebsstrang eines Radfahrzeuges nach Anspruch 1, **gekennzeichnet durch** eine Kupplungssteuereinrichtung (65) zur Steuerung des Übertragungsverhältnisses der zweiten Kupplungseinrichtung (10) derart, daß

(a) das zweite Verhältnis 0 ist, wenn die Drehfrequenz der vom Getriebe (3) abgegebenen Antriebskraft kleiner als ein erster vorgegebener Wert ist,

(b) das Verhältnis als Funktion einer Zunahme der Drehfrequenz der vom Getriebe (3) abgegebenen Antriebskraft in einem Zustand zunimmt, bei dem die Drehfrequenz gleich oder größer als der erste vorgegebene Wert und kleiner als ein zweiter vorgegebener Wert ist, und

(c) das Verhältnis gleich 1,0 gehalten wird, wenn die Drehfrequenz der vom Getriebe (3) abgegebenen Antriebskraft gleich oder größer als der zweite vorgegebene Wert ist.

3. Antriebsstrang eines Radfahrzeuges nach Anspruch 2, **dadurch gekennzeichnet**, daß die zweite Kupplungseinrichtung (10) folgende Komponenten umfaßt:

(a) eine erste mit dem Getriebe (3) verbundene und mit diesem rotierende Kupplungsplatte (35a),

(b) eine zweite mit dem antreibenden Rad verbundene und mit diesem rotierende Kupplungsplatte (35b),

(c) mit einer der Kupplungsplatten (35a bzw. 35b) verbundene Kupplungsbetätigungsmittel (34) zwecks Bewegung einer der Kupplungsplatten (35a bzw. 35b) aufeinander zu und voneinander weg als Funktion von ihnen zugeführtem Öldruck,

(d) Ölverteilermittel (6) zur Zufuhr von unter Druck stehendem Öl zu den Kupplungsbetätigungsmitteln (34), und

(e) Regelmittel (8), welche mit der vom Getriebe (3) abgegebenen antreibenden Bewegung rotieren und den Ölfluß als Funktion der Drehfrequenz der antreibenden Bewegung regeln.

4. Antriebsstrang für ein Radfahrzeug nach Anspruch 1, 2 oder 3, mit einer Getriebeeinstelleinrichtung (278) zur selektiven Einstellung eines Getriebeverhältnisses auf ein hohes Verhältnis oder ein kleines Verhältnis gemäß der Betätigung durch einen Fahrer.

5. Antriebsstrang für ein Radfahrzeug nach den vorhergehenden Ansprüchen, bei dem das stufenlose automatische Getriebe (3) folgende Komponenten umfaßt:

(a) eine durch den Motor angetriebene antreibende Riemenscheibe (60) mit einer antreibenden Welle (4), einem fest mit der Antriebswelle (4) verbundenen festen antreibenden Flansch (60b), einem längs der Achse der antreibenden Welle (4) gleitenden und mit dieser um die Achse rotierenden gleitenden antreibenden Flansch (60a),

(b) eine mit dem antreibenden Rad verbundene angetriebene Riemenscheibe (61) mit einer um ihre Achse rotierenden angetriebenen Welle (5), einem mit der angetriebenen Welle (5) fest verbundenen festen angetriebenen Flansch (61b), einem längs der Achse der angetriebenen Welle (5) gleitenden und mit dieser um die Achse rotierenden gleitenden angetriebenen Flansch (61a),

(c) endlose Drehmomentübertragungsmittel (62) zur Übertragung eines Drehmomentes von der antreibenden Riemenscheibe (60) auf die Riemenscheibe (61), und

(d) einen Ölverteiler (6), welcher zur Änderung des Übertragungsverhältnisses selektiv unter hohem Druck stehendes Öl und unter geringem Druck stehendes Öl zur antreibenden Riemenscheibe (60) und zur angetriebenen Riemenscheibe (60) mit konstanter Druckdifferenz zwischen dem unter hohem Druck und dem unter geringem Druck stehendem Öl leitet,

wodurch ein effektiver Durchmesser der antreibenden Riemenscheibe (60) und der angetriebenen Riemenscheibe (60) derart geändert wird, daß sich das Übertragungsverhältnis durch Änderung der Stellung des gleitenden antreibenden Flansches (60a) und des gleitenden angetriebenen Flansches (61a) ändert.

6. Antriebsstrang für ein Radfahrzeug nach Anspruch 5, **dadurch gekennzeichnet**, daß die endlosen Drehmomentübertragungsmittel (62) folgende Komponenten umfassen:

(a) äußere erste Verbindungsplatten (601) mit einem ersten Ende, einem zweiten Ende und einem Ansatz (614), der senkrecht zu der das erste und zweite Ende verbindenden Linie verläuft, wobei das erste Ende und das zweite Ende ein erstes Durchgangsloch (605) und der Ansatz (614) ein Durchgangsloch (615) aufweisen,

(b) zwischen einem Paar von äußeren ersten Verbindungsplatten (601) angeordnete innere erste Verbindungsplatten (603) mit einem dritten Ende und einem vierten Ende, wobei das dritte und vierte Ende ein gegenüber dem ersten Durchgangsloch (605) größeres zweites Durchgangsloch (607) aufweisen,

(c) alternierend mit dem inneren ersten Verbindungsplatten (603) zwischen einem Paar von äußeren ersten Verbindungsplatten (601) angeordnete innere zweite Verbindungsplatten (602, 604) mit einem fünften Ende und einem sechsten Ende, wobei das fünfte und sechste Ende ein zweites Durchgangsloch (618) aufweisen,

(d) die äußeren ersten Verbindungsplatten, die inneren ersten Verbindungsplatten und die inneren zweiten Verbindungsplatten verschraubende, in die ersten und zweiten Durchgangslöcher eingesetzte Verbindungsstifte (609),

(e) die inneren ersten Verbindungsplatten und die inneren zweiten Verbindungsplatten verschraubende und in die zweiten Durchgangslöcher eingesetzte Arretierungsstifte (610), und

(f) senkrecht zu den äußeren ersten Verbindungsplatten angeordnete, die Durchgangslöcher des Einsatzes verschraubende und sich aus diesen nach außen erstreckende elastische Elemente (616, 619).

7. Antriebsstrang für ein Radfahrzeug nach Anspruch 5 oder 6 mit einer Einrichtung zur Regulierung der dem Getriebe zugeführten Ölmenge unter Berücksichtigung der durch eine Temperaturänderung bedingten Änderung der Viskosität des Öls.

8. Antriebsstrang für ein Radfahrzeug nach Anspruch 7, **dadurch gekennzeichnet**, daß der Ölverteiler (6) Ölöffnungen (96, 97, 98, 100) zur Verteilung des unter hohem Druck stehenden Öls und des unter geringem Druck stehenden Öls aufweist, deren offene Fläche als Funktion der Temperatur des zuzuführenden Öls variabel ist.

9. Verfahren zur Regelung eines Antriebsstrangs eines Fahrzeugs mit einem Motor und wenigstens einem antreibenden Rad, der eine mit dem Motor verbundene erste Kupplungseinrichtung (7) zur Aufnahme einer antreibenden Kraft von diesem sowie zur Abgabe der antreibenden Kraft, ein mit der ersten Kupplungseinrichtung (7) verbundenes stufenloses Getriebe (3) zur Aufnahme der antreibenden Kraft von dieser sowie zur Abgabe der antreibenden Kraft sowie eine zweite mit dem Getriebe verbundene Kupplungseinrichtung (10) zur Aufnahme der antreibenden Kraft von diesem sowie zur Übertragung der antreibenden Kraft auf das antreibende Rad umfaßt, mit folgenden Schritten:

(a) Einstellen eines Übertragungsverhältnisses an der ersten Kupplungseinrichtung (7) gemäß einer Betätigung durch einen Fahrer, und

(b) automatisches Einstellen eines Übertragungsverhältnisses am Getriebe (3), dadurch gekennzeichnet, daß

(c) an der zweiten Küpplungseinrichtung (10) als Funktion einer Drehfrequenz der vom Getriebe (3) abgegebenen antreibenden Kraft automatisch ein zweites Übertragungsverhältnis eingestellt wird.

10. Verfahren zur Regelung eines Antriebsstrangs nach Anspruch 9, **dadurch gekennzeichnet**, daß die Einstellung des Übertragungsverhältnisses folgende Schritte umfaßt:

(a) Einstellen des Übertragungsverhältnisses auf 0, wenn die Drehfrequenz der vom Getriebe (3) abgegebenen antreibenden Kraft kleiner als ein erster vorgegebener Wert ist,

(b) Einstellen des Übertragungsverhältnisses als Funktion einer Zunahme der Drehfrequenz der vom Getriebe (3) abgegebenen antreibenden Kraft, wenn die Drehfrequenz des Motors gleich oder größer als der erste vorgegebene Wert und die Drehfrequenz der Antriebswelle kleiner als ein zweiter vorgegebener Wert ist, und

(c) Festhalten des Übertragungsverhältnisses auf 1,0, wenn die Drehfrequenz der vom Getriebe (3) abgegebenen antreibenden Kraft gleich oder größer als der erste vorgegebene Wert und die Drehfrequenz der vom Getriebe (3) abgegebenen antreibenden Kraft gleich oder größer als ein zweiter vorgegebener Wert ist.

## Revendications

1. Train de transmission pour un véhicule à roues muni d'un moteur et d'au moins une roue motrice; comprenant

(a) un premier dispositif d'embrayage (7) relié au moteur, destiné à en recevoir de la force motrice et à restituer la force motrice en fonction d'un premier rapport de transfert existant entre les deux éléments, ce rapport variant en fonction d'une action d'un conducteur;

(b) une transmission automatique (3) variable en continu reliée au premier dispositif d'embrayage (7), destinée à en recevoir la force motrice et à restituer la force motrice en en faisant varier une vitesse de rotation; et

(c) un deuxième dispositif d'embrayage (10) relié à la transmission (3), destiné à en recevoir la force motrice et à transmettre la force motrice à la roue motrice en fonction d'un deuxième rapport de transfert existant entre les deux éléments, caractérisé en ce que ledit deuxième rapport de transfert varie en fonction d'une fréquence de rotation de la force motrice restituée par la transmission (3).

2. Train de transmission pour un véhicule à roues selon la revendication 1, caractérisé de plus en ce qu'il comporte un dispositif (65) de commande d'embrayage, destiné à commander le rapport de transfert du deuxième dispositif d'embrayage (10) de telle sorte que

(a) le deuxième rapport soit nul lorsqu'une fréquence de la force motrice restituée par la transmission (3), est inférieure à une première valeur de consigne;

(b) le rapport augmente en fonction d'une augmentation de la fréquence de rotation de la force motrice restituée par la transmission (3), dans la mesure où la fréquence de rotation est égale ou supérieure à la première valeur de consigne et est inférieure à une deuxième valeur de consigne; et que

(c) le rapport soit maintenu à la valeur 1.0 lorsque la fréquence de rotation de la force motrice restituée par la transmission (3), est égale ou supérieure à ladite deuxième valeur de consigne.

3. Train de transmission pour un véhicule à roues selon la revendication 2, caractérisé en ce que le deuxième dispositif d'embrayage (10) comprend

(a) un premier disque (35a) d'embrayage relié à la transmission (3) pour tourner avec cette dernière;

(b) un deuxième disque (35b) d'embrayage relié à la roue motrice pour tourner avec cette dernière;

(c) un dispositif (34) d'actionnement de l'embrayage relié à l'un des premiers disques (35a) d'embrayage et au deuxième disque (35b) d'embrayage de manière à déplacer ledit un des premiers disques (35a) d'embrayage et le deuxième disque (35b) d'embrayage l'un vers l'autre et à les écarter l'un de l'autre, en fonction de l'application d'une pression d'huile approvisionné dans ce dispositif;

(d) un dispositif distributeur (6) d'huile destiné à délivrer de l'huile sous pression au dispositif (34) d'actionnement d'embrayage; et

(e) un dispositif régulateur (8) agencé de manière à tourner de façon synchrone avec le mouvement d'entraînement restitué par la transmission (3) et à réguler le débit d'huile en fonction de la fréquence de rotation du mouvement d'entraînement.

4. Train de transmission pour un véhicule à roues selon les revendications 1, 2 ou 3, dans lequel un dispositif (278) de préréglage de la transmission est prévu pour prérégler de façon sélective un rapport de transmission à un rapport élevé ou à un rapport faible, selon l'action d'un conducteur.

5. Train de transmission pour un véhicule à roues selon l'une quelconque des revendications précédentes, dans lequel la transmission automatique (3) variable en continu comprend

(a) une poulie menante (60), entraînée par le moteur, comportant un arbre menant (4), un plateau menant fixe (60b) relié de façon fixe à l'arbre menant (4), un plateau menant coulissant (60a) pouvant coulisser le long d'un axe de l'arbre menant (4) et pouvant tourner de façon synchrone avec ce dernier, autour de son axe;

(b) une poulie menée (61) reliée à la roue motrice, comportant un arbre mené (5) pouvant tourner autour de son axe, un plateau mené (61b) relié de façon fixe à l'arbre mené (5), un plateau mené mobile (61a) pouvant coulisser le long de l'axe de l'arbre mené (5) et pouvant tourner de façon synchrone avec ce dernier, autour de son axe;

(c) des moyens sans fin (62) de transmission de couple destinés à transmettre le couple de la poulie menante (60) à la poulie menée (61); et

(d) un distributeur (6) d'huile, qui achemine de façon sélective de l'huile sous haute pression et de l'huile sous basse pression vers la poulie menante (60) et la poulie menée (61) de façon à faire varier le rapport de transmission, la différence de pression entre la pression d'huile élevée et la pression d'huile basse restant généralement constante;

de façon à faire varier un diamètre effectif de la poulie menante (60) et de la poulie menée (61) de façon à faire varier un rapport de transmission, en modifiant la position du plateau menant mobile (60a) et du plateau mené mobile (61a).

6. Train de transmission pour un véhicule à roues selon la revendication 5, qui est caractérisé en ce que les moyens sans fin (62) de transmission du couple comprement

(a) des premiers maillons externes (601) de liaison comprenant une première et une deuxième extrémité et une saillie (614) s'étendant perpendiculairement à la ligne joignant les première et deuxième extrémités, les première et deuxième extrémités étant pourvues d'un premier trou débouchant (605), et la saillie (614) étant pourvue d'un trou débouchant (615);

(b) des premiers maillons internes (603) de liaison disposés entre une paire de premiers maillons externes (601) de liaison, les premiers maillons internes (603) comprenant une troisième et une quatrième extrémité, les troisième et quatrième extrémités étant pourvues d'un deuxième trou débouchant (607) qui est plus grand que le premier trou débouchant (605);

(c) des seconds maillons internes (602, 604) de liaison disposés, en alternance avec les premiers maillons internes (603) de liaison, entre une paire de premiers maillons externes (601) de liaison, les seconds maillons internes (602, 604) de liaison comprenant une cinquième et une sixième extrémité, les cinquième et sixième extrémités étant pourvues d'un deuxième trou débouchant (618);

(d) des axes (609) de liaison s'enfilant dans les premiers maillons externes de liaison, les premiers maillons internes de liaison et les seconds maillons internes de liaison, en étant insérés dans les premiers et deuxièmes trous débouchants;

(e) des axes (610) de verrouillage s'enfilant dans les premiers maillons internes de liaison et les seconds maillons internes de liaison, en étant insérés dans les deuxièmes trous débouchants; et

(f) des éléments élastiques (616, 619) disposés perpendiculairement aux premiers maillons externes de liaison, s'enfilant à travers les trous débouchants des saillies et s'étendant vers l'extérieur, à travers ces derniers.

7. Train de transmission pour un véhicule à roues selon la revendication 5 ou 6, comprenant de plus des moyens pour réguler la quantité d'huile à fournir à la transmission, prenant en compte le changement de la viscosité de l'huile, entraîné par le changement de la température de l'huile.

8. Train de transmission pour un véhicule à roues selon la revendication 7, qui est caractérisé en ce que le distributeur (6) d'huile comporte des orifices (96, 97, 98, 100) d'huile destinés à distribuer l'huile sous haute pression et l'huile sous basse pression à travers ces orifices, l'aire d'ouverture des orifices étant variable en fonction de la température de l'huile délivrée à travers ceux-ci.

9. Procédé de commande d'un train de transmission pour un véhicule à roues muni d'un moteur et d'au moins une roue motrice, le train de transmission comprenant un premier dispositif d'embrayage (7) relié au moteur, destiné à en recevoir de la force motrice et à restituer la force motrice; une transmission (3) variable en continu reliée au premier dispositif d'embrayage (7), destinée à en recevoir la force motrice et à restituer la force motrice; et un deuxième dispositif d'embrayage (10) relié à la transmission, destiné à en recevoir la force motrice et à transmettre la force motrice à la roue motrice, ce procédé comprenant les étapes:

(a) de réglage d'un rapport de transfert au niveau du premier dispositif d'embrayage (7) en fonction d'une action du conducteur; et

(b) de réglage automatique d'un rapport de transmission au niveau de la transmission (3); caractérisé par

(c) un réglage automatique d'un deuxième rapport de transfert au niveau du deuxième dispositif d'embrayage (10), en fonction de la fréquence de rotation à laquelle la force motrice est restituée par la transmission (3).

10. Procédé de commande et de régulation d'un train de transmission selon la revendication 9, ce procédé étant caractérisé en ce que l'étape de réglage du rapport de transfert comporte les étapes de

(a) réglage à zéro du rapport de transfert lorsque la fréquence de rotation de la force motrice restituée par la transmission (3) est inférieure à une première valeur de consigne;

(b) réglage du rapport de transfert en fonction d'une augmentation de la fréquence de rotation de la force motrice restituée par la transmission (3), lorsque la vitesse de rotation du moteur est égale ou supérieure à la première valeur de consigne, et que la vitesse de rotation de l'arbre menant est inférieure à la deuxième valeur de consigne; et

(c) de maintien du rapport de transfert à une valeur 1.0 lorsque la fréquence de rotation, à laquelle la force motrice est restituée par la transmission (3), est égale ou supérieure à la première valeur de consigne, et que la fréquence de rotation de la force motrice restituée par la transmission (3), est égale ou supérieure à une deuxième valeur de consigne.

# FIG.1

# FIG.2

# FIG. 3

(A)

(B)

(C)

(D)

# FIG.4

CONTROL
UNIT

# FIG.5

OIL PRESSURE

HIGHER PRESSURE (P$_1$)

PRESSURE DIFFERENCE

LOWER PRESSURE (P$_2$)

1/TRANSMISSION RATIO ——►

# FIG.6

# FIG.7

# FIG.8

```
        ( SUBROUTINE )
              │
              ▼
   ┌─────────────────────┐
   │ ATH , TOIL , V, Nep  │──── S1
   └─────────────────────┘
              │
              ▼
   ┌─────────────────────┐
   │   Net DETERMINE     │──── S2
   └─────────────────────┘
              │              S3
        NO    ▼         YES
   ◄────< | Net − Nep | > E >────┐
              │                  │
              ▼                  │
   ┌─────────────────────┐       │
   │   L ← f (Net − Nep)  │──── S4
   └─────────────────────┘
              │
              ▼
   ┌─────────────────────┐
   │   K ← g (T OIL )    │──── S5
   └─────────────────────┘
              │
              ▼
   ┌─────────────────────┐
   │      L ← K · L       │──── S6
   └─────────────────────┘
              │
              ▼
         ( RETURN )
```

# FIG.9

# FIG. 10

# FIG. 11